# EUROPÄISCHE PATENTSCHRIFT

(11) **EP 1 815 939 B1**
(45) Veröffentlichungstag und Bekanntmachung des Hinweises auf die Patenterteilung: **23.05.2012**
(21) Anmeldenummer: 07001705.8
(22) Anmeldetag: 26.01.2007
(51) Int. Cl.: B23K 37/04, B23Q 1/62, B23Q 3/10, B23Q 3/18, B23Q 17/22, B25B 5/00, F16M 11/04, G01B 5/00

(54) **Halterung für eine Spanneinheit mit über Führungsnuten und Nutensteine verschiebbaren Stellplatten und Konsole ; Spannvorrichtung mit einer solchen Halterung**
Positioning means for a clamping unit with positioning plates and console sliding through grooves and T-nuts ; Clamping device with such positioning means
Element de positionement pour unité de fixation avec des plaques de positionement et une console coulissant par un système rainure-ecrou en T ; Unité de fixation avec un tel élément de positionement

(30) Priorität: 01.02.2006 DE 202006001505 U
(43) Veröffentlichungstag der Anmeldung: 08.08.2007
(73) Patentinhaber: Staudinger, Karl, 86316 Friedberg (DE)
(72) Erfinder: Staudinger, Karl, 86316 Friedberg (DE)
(74) Vertreter: Schwarz, Thomas

(56) Entgegenhaltungen:
- EP-A- 0 803 322
- EP-A- 1 050 738
- DE-A1- 2 312 786
- DE-U1- 9 104 820
- JP-A- 61 293 683
- US-A- 5 547 330
- US-B1- 6 298 572

## Beschreibung

Die Erfindung betrifft eine Halterung zur lagegenauen Anordnung einer Spanneinheit gemäβ dem Oberbegriff des Anspruchs 1 (siche, z.B., US 6 298 572) und eine Spannvorrichtung mit einer derartigen Halterung (Siche Anspruch 4).

Vor allem in der Schweißbearbeitung werden Spannvorrichtungen benötigt, die einerseits eine gute Zugänglichkeit zum Werkstück und andererseits eine genaue Positionierung und sichere Halterung der Werkstücke gewährleisten. Um wiederholgenaue und präzise Schweißarbeiten mit den üblicherweise verwendeten Schweißrobotern zu ermöglichen, müssen die Spannvorrichtungen genau positioniert werden. Bei den üblicherweise verwendeten Halterungen ist die exakte Ausrichtung und Positionierung der Spannvorrichtungen jedoch aufwändig und erfordert entsprechendes Fingerspitzengefühl.

Aus der US 6 298 572 B1 ist eine gattungsgemäße Halterung für eine Spanneinheit mit einer unteren Plattform, einer auf der Plattform in einer ersten Achse verstellbar angeordneten Konsole und einem an der Konsole in einer zweiten Achse verstellbar angeordneten Block mit einer darin höhenverstellbar angeordneten Auflagestange bekannt. Zur Verstellung der einzelnen Teile weist die Halterung nicht näher spezifizierte Schlitten auf.

Eine in der EP 0 803 322 A1 offenbarte Einstellvorrichtung zur Feineinstellung von Anschlägen, Aufnahmebolzen und Konturpassstücken weist einen Grundkörper mit einer zentralen Spannschraube, einen gegenüber dem Grundkörper in Achsrichtung der Spannschraube verstellbaren ersten Führungskörper, einen gegenüber dem ersten Führungskörper quer zur Achsrichtung der Spannschraube verstellbaren zweiten Führungskörper und einen am zweiten Führungskörper in dessen Verstellebene aber senkrecht zu dessen Verstellrichtung verstellbaren Abschlusskörper auf. Bei dieser Einstellvorrichtung sind zwischen dem ersten Führungskörper und dem zweiten Führungskörper sowie zwischen dem zweiten Führungskörper und dem Abschlusskörper jeweils Nut- und Federführungen mit einer im Bereich einer Durchgangsbohrung für die Spannschraube angeordneten Feder angeordnet. Die Feineinstellung erfolgt hier durch Stellschrauben, die an den entsprechenden Federn zur Anlage gelangen.

In der DE 2 312 786 A1 ist eine Ausrichteinrichtung für Werkzeug- oder Werkstückträger mit zwei über Stellschrauben und Verstellkeile gegeneinander verstellbaren Ausrichtelementen bekannt. Um die Verstellkeile mit kleineren Wegen zu verstellen, können die Einstellschrauben mit Differentialgewinde ausgestattet sein.

Aufgabe der Erfindung ist es, eine Halterung für eine Spannvorrichtung und eine mit einer derartigen Halterung versehene Spannvorrichtung zu schaffen, die eine einfache und exakte Einstellung der Spannposition ohne Verklemmung in mehreren Achsen ermöglichen.

Diese Aufgabe wird durch eine Halterung mit den Merkmalen des Anspruchs 1 und durch eine Spannvorrichtung mit den Merkmalen des Anspruchs 4 gelöst. Zweckmäßige Ausgestaltungen und vorteilhafte Weiterbildungen der Erfindung sind Gegenstand der Unteransprüche.

Ein wesentlicher Vorteil der erfindungsgemäßen Haltevorrichtung besteht darin, dass die Spannvorrichtung in mehreren Richtungen einfach und mit hoher Präzision ausgerichtet und eingestellt werden kann. Über die Führungsnuten und die zugehörigen Nutensteine wird eine äußerst genaue Führung erreicht. Die Führungsnuten und Nutensteine weisen eine genaue Führungspassung und ein Führungsverhältnis (Verhältnis des Anstands der Führungssteine zur Breite der Führungsnut) von mindestens 7 auf. Dadurch wird eine genaue und dennoch klemmfreie Führung ermöglicht.

Zur Feineinstellung ist die Stellschraube auch als Differentialschraube ausgeführt.

Weitere Besonderheiten und Vorzüge der Erfindung ergeben sich aus der folgenden Beschreibung bevorzugter Ausführungsbeispiele anhand der Zeichnung. Es zeigen:
- **Figur 1**: eine erstes Ausführungsbeispiel einer Spannvorrichtung mit Halterung und Spanneinheit in einer Seitenansicht;
- **Figur 2**: eine untere Stellplatte und eine Konsole der Halterung von Figur 1 in einer Draufsicht;
- **Figur 3**: die untere Stellplatte und die Konsole der Halterung von Figur 1 in einer Vorderansicht;
- **Figur 4**: die untere Stellplatte und die Konsole der Halterung von Figur 3 in einer Draufsicht;
- **Figur 5**: ein Beispiel einer Spannvorrichtung mit Halterung und Spanneinheit in einer Seitenansicht, die nicht Gegenstand der Erfindung ist;
- **Figur 6**: eine untere Stellplatte und eine Konsole der Halterung von Figur 5 in einer Draufsicht;
- **Figur 7**: die untere Stellplatte und die Konsole der Halterung von Figur 5 in einer Vorderansicht;
- **Figur 8**: ein zweites Ausführungsbeispiel einer Spannvorrichtung gemäß der Erfindung mit Halterung und Spanneinheit in einer Seitenansicht;
- **Figur 9**: eine untere Stellplatte und eine Konsole der Halterung von Figur 8 in einer Draufsicht;
- **Figur 10**: ein zweites Beispiel einer Spannvorrichtung mit Halterung und Spanneinheit in einer Seitenansicht, die nicht Gegenstand der Erfindung ist;
- **Figur 11**: eine untere Stellplatte und eine Konsole der Halterung von Figur 8 in einer Draufsicht;
- **Figur 12**: eine weitere Halterung für eine Spannvorrichtung, die nicht Gegenstand der Erfindung ist, in einer Seitenansicht;
- **Figur 13**: eine Schnittansicht entlang der Linie A-A von Figur 12;
- **Figur 14**: eine Schnittansicht entlang der Linie B-B von Figur 12;
- **Figur 15**: eine Schnittansicht entlang der Linie C-C von Figur 12;
- **Figur 16**: eine alternative Stelleinrichtung, die nicht Gegenstand der Erfindung ist, in einer Seitenansicht und
- **Figur 17**: eine weitere alternative Stelleinrichtung in einer Seitenansicht.

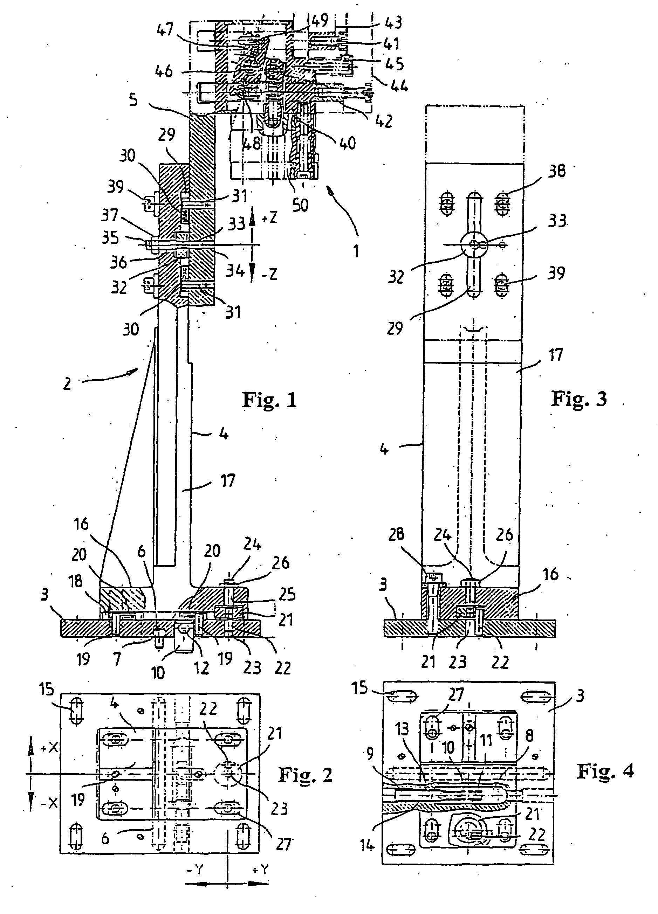

Die in Figuren 1 dargestellte Spannvorrichtung umfasst eine Spanneinheit 1 und eine Halterung 2, mit deren Hilfe die Spanneinheit 1 in mehreren Richtungen genau eingestellt bzw. justiert werden kann. Wie besonders aus den Figuren 2 bis 4 hervorgeht, enthält die dort in mehreren Ansichten dargestellte Halterung 2 eine auf einem hier nicht gezeigten Unterteil in einer ersten Achse (X-Achse) horizontal verstellbar angeordnete untere Stellplatte 3, eine auf der unteren Stellplatte 3 in einer zur ersten Achse senkrechten zweiten Achse (Y-Achse) horizontal verstellbar angeordnete Konsole 4 und eine an der Konsole 4 in einer zur ersten und zweiten Achse senkrechten dritten Achse (Z-Achse) vertikal verstellbar angeordnete obere Stellplatte 5, an der die Spanneinheit 1 befestigt ist.

Die untere Stellplatte 3 ist über eine an deren Unterseite vorgesehene erste Führungsnut 6 und in Figur 1 erkennbare Nutensteine 7 auf dem nicht dargestellten Unterteil in der ersten Achse (X-Achse) verschiebbar geführt. Zur Verstellung der unteren Stellplatte 3 gegenüber dem Unterteil ist in einer in Richtung der ersten Achse verlaufenden Aufnahmenut 8 der Stellplatte 3 ein in das Unterteil eingreifender und durch eine Stellschraube 9 verstellbarer Stellzapfen 10 verschiebbar geführt. Die Stellschraube 9 greift gemäß Figur 4 mit einem vorderen Gewindeteil 11 in eine in Figur 1 erkennbare Gewindebohrung 12 des Stellzapfens 10 ein und ist mit einem hinteren Gewindeteil 13 in einer seitlichen Gewindebohrung 14 der unteren Stellplatte 3 geführt. Durch Verstellung der Stellschraube 9 kann so die untere Stellplatte 3 in der ersten Achse (X-Achse) verstellt werden. An den Ecken der unteren Stellplatte 3 sind Langlöcher 15 für Halteschrauben vorgesehen, über welche die untere Stellplatte 3 in einer mit Hilfe der Stellschraube 9 eingestellten Position fixiert werden kann.

Die Konsole 4 enthält eine untere Standplatte 16 und einen vertikal nach oben ragenden Haltesteg 17, an dem die obere Stellplatte 5 befestigt ist. An der Unterseite der Standplatte 16 der Konsole 4 befindet sich eine zweite Führungsnut 18, in die zwei durch Stifte 19 auf der unteren Stellplatte 3 befestigte Nutensteine 20 eingreifen. Über die Führungsnut 18 und die beiden Nutensteine 20 ist die Konsole 4 auf der unteren Stellplatte 3 in der zur ersten Achse senkrechten zweiten Achse (Y-Achse) verschiebbar geführt. Die Verstellung der Konsole 4 erfolgt über einen ersten Stellexzenter, der eine drehbare Stellscheibe 21 und einen zur Drehachse der Stellscheibe 21 seitlich versetzten Stellzapfen 22 enthält. Der nach unten vorstehende Stellzapfen 22 greift in ein quer zur Verstellrichtung der Konsole 4 verlaufendes Langloch 23 in der unteren Stellplatte 3 ein. Die Stellscheibe 21 kann durch eine mit dieser fest verbundenen Stellschraube 24 verdreht werden. Sie ist in einer entsprechenden Gewindebohrung 25 der Konsole 4 angeordnet und kann durch eine Kontermutter 26 gesichert werden. Durch Drehung der Stellscheibe 21 mit Hilfe der Stellschraube 24 kann die Konsole 4 relativ zur unteren Stellplatte 3 in der zweiten Achse (Y-Achse) verstellt werden. An den Ecken der Standplatte 16 der Konsole 3 sind ebenfalls in deren Verstellrichtung verlaufende Langlöcher 27 für Halteschrauben 28 vorgesehen, über welche die Konsole 4 in einer mit Hilfe des ersten Stellexzenters eingestellten Position gegenüber der unteren Stellplatte 3 fixiert werden kann.

Die am oberen Teil der Konsole 4 angeordnete obere Stellplatte 5 ist über eine in der Konsole 4 in Verstellrichtung der oberen Stellplatte 5 verlaufende dritte Führungsnut 29 und zwei an der oberen Stellplatte 5 befestigte Nutensteine 30 in der dritten Achse (Z-Achse) vertikal verschiebbar geführt. Die beiden Nutensteine 30 sind über Stifte 31 an der Stellplatte 5 befestigt. Hier erfolgt die Verstellung der Konsole 4 über einen zweiten Stellexzenter, der ebenfalls eine drehbare Stellscheibe 32 und einen zur Drehachse der Stellscheibe 32 seitlich versetzten Stellzapfen 33 enthält. Der von der Stellscheibe 32 seitlich vorstehende Stellzapfen 33 greift gemäß Figur 1 in ein quer zur Verstellrichtung der oberen Stellplatte 5 verlaufendes Langloch 34 in der oberen Stellplatte 5 ein. Die Stellscheibe 32 kann auch hier durch eine mit dieser fest verbundenen Stellschraube 35 verdreht werden. Sie ist in einer entsprechenden Gewindebohrung 36 der Konsole 4 angeordnet und kann durch eine Kontermutter 37 gesichert werden. Durch Drehung der Stellscheibe 32 mit Hilfe der Stellschraube 35 kann die obere Stellplatte 5 in der dritten Achse (Z-Achse) verstellt werden. Dadurch kann die Höhe der Spanneinheit 1 eingestellt werden. Über vier im oberen Teil der Konsole 4 angeordnete, in Verstellrichtung der oberen Stellplatte 5 verlaufende Langlöcher 38 und zugehörige Halteschrauben 39 kann die obere Stellplatte 5 gemäß Figur 3 in einer mit Hilfe des zweiten Stellexzenters eingestellten Position fixiert werden.

Die in Figur 1 in einer Seitenansicht dargestellte Spanneinheit 1 enthält ein Gehäuse 40, in dem zwei in gleicher Höhe nebeneinander angeordnete obere Wellen 41 und zwei dazu parallel versetzte untere Wellen 42 verschiebbar geführt sind. An den aus dem Gehäuse 40 nach außen vorstehenden Enden der beiden oberen Wellen 41 ist eine in Figur 1 strichpunktiert dargestellte erste Spannbacke 43 befestigt. An den aus dem Gehäuse 1 nach außen vorstehenden Enden der beiden unteren Wellen 42 ist eine in Figur 1 ebenfalls strichpunktiert dargestellte zweite Spannbacke 44 befestigt. An der zu den Spannbacken 43 und 44 weisenden Seitenwand des Gehäuses 40 ist zwischen den oberen Wellen 41 und den unteren Wellen 42 ein mit einer keilförmigen Aufnahmenut versehendes Auflageteil 45 zur Zentrierung der zu spannenden Werkstücke befestigt.

Innerhalb des Gehäuses 40 ist ein um eine Achse 46 drehbarer Gabelhebel 47 angeordnet, durch den die Spannbacken 43 und 44 über die Wellen 41 bzw. 42 und zugehörige Übertragungsbolzen 48 bzw. 49 manuell über einen nicht gezeigten Handhebel und/oder motorisch durch einen an der Unterseite des Gehäuses 40 montierten Stellantrieb 50 zum Schließen gleichzeitig aufeinander zu oder zum Öffnen voneinander weg bewegt werden können. Dadurch kann ein Werkstück zentrisch zwischen den beiden Spannbacken 43 und 44 gespannt werden.

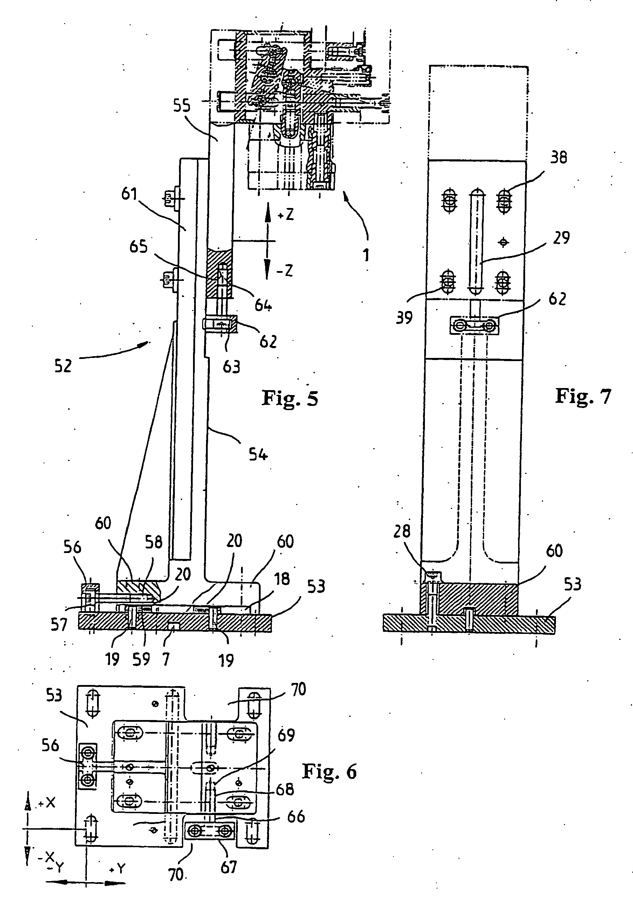

In Figur 5 ist ein Beispiel einer Spannvorrichtung mit einer Spanneinheit 1 und einer Halterung 52 gezeigt, die nicht Gegenstand der Erfindung ist. Die Spanneinheit 1 entspricht der Ausführungsform von Figur 1, so dass auf deren Beschreibung Bezug genommen wird. Die Halterung 52 enthält ebenfalls eine auf einem Unterteil in einer ersten Achse (X-Achse) verstellbar angeordnete untere Stellplatte 53, eine auf der unteren Stellplatte 53 in der zweiten Achse (Y-Achse) verstellbare Konsole 54 und eine an der Konsole 54 in der dritten Achse (Z-Achse) verstellbar angeordnete obere Stellplatte 55. Wie beim Ausführungsbeispiel von Figur 1 sind auch hier die untere Stellplatte 53, die Konsole 54 und die obere Stellplatte 55 über Führungsnuten und zugehörige Nutensteine verschiebbar geführt. Einander entsprechende Bauteile sind daher auch mit denselben Bezugszeichen versehen. Im Gegensatz zum ersten Ausführungsbeispiel erfolgt die Verstellung der Konsole 54 und der oberen Stellplatte 55 hier jedoch nicht über Stellexzenter, sondern über eine Schraubenverstellung mit einem Stellklotz und einer zugehörigen Stellschraube.

Auf der unteren Stellplatte 53 ist hierzu ein Stellklotz 56 montiert, in dem eine horizontale Stellschraube 57 in Axialrichtung gesichert angeordnet ist. Die Stellschraube 57 greift mit ihrem vorderen Gewindezapfen 58 in eine Gewindebohrung 59 an der Seite einer unteren Standplatte 60 der Konsole 54 ein. Durch Drehung der Stellschraube 57 kann so die Konsole 54 gegenüber der unteren Stellplatte 53 verschoben werden.

Auch an dem nach oben ragenden Haltesteg 61 der Konsole 54 ist ein Stellklotz 62 angeordnet, in dem eine vertikale Stellschraube 63 in Axialrichtung gesichert angeordnet ist. Die Stellschraube 63 greift mit ihrem vorderen Gewindezapfen 64 in eine Gewindebohrung 65 an der Unterseite der oberen Stellplatte 55 ein. Durch Drehung der Stellschraube 63 kann damit die obere Stellplatte 55 gegenüber der Konsole 54 in der Höhe verstellt werden.

Wie aus Figur 6 ersichtlich, erfolgt auch die Verstellung der unteren Stellplatte 53 über mindestens eine Stellschraube 66, die in einem auf dem Unterteil befestigbaren Stellklotz 67 axial gesichert angeordnet ist und mit ihrem vorderen Gewindezapfen 68 in eine seitliche Gewindebohrung 69 der unteren Stellplatte 53 eingreift. Durch Drehung der Stellschraube 66 kann die untere Stellplatte 55 auf dem nicht gezeigten Unterteil in der X-Achse verstellt werden. Die untere Stellplatte weist zwei gegenüberliegende Ausnehmungen 70 und 71 für den Stellklotz 67 und entsprechende Gewindebohrungen 69 auf beiden Seiten auf. Dadurch kann ein Stellklotz 67 auf einer der beiden Seiten oder bei Bedarf auch auf beiden Seiten montiert werden.

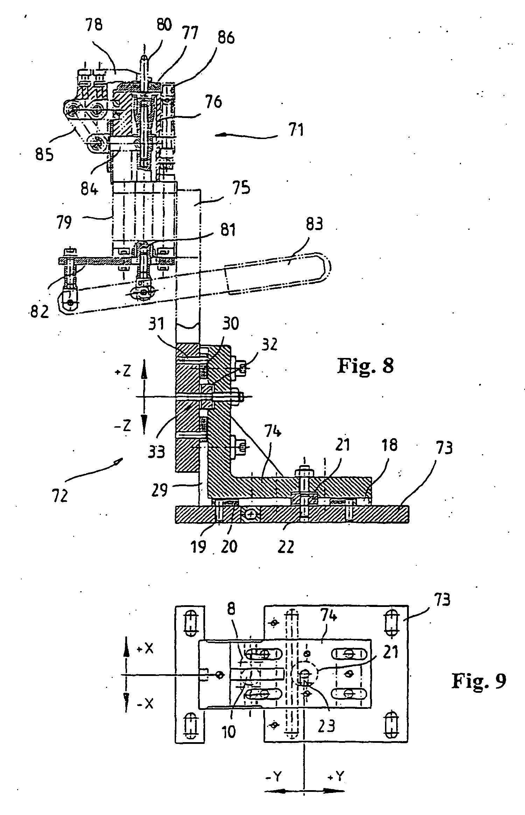

In den Figuren 8 und 9 ist ein zweites Ausführungsbeispiel einer Spannvorrichtung gemäß der Erfindung mit einer Spanneinheit 71 und einer Halterung 72 gezeigt. Im Unterschied zur Ausführung von Figur 1 ist hier eine mit seitlichen Ausnehmungen versehene untere Stellplatte 73 und eine winkelförmige Konsole 74 mit einer oberen Stellplatte 75 vorgesehen. Die Verstellung der unteren Stellplatte 73, der Konsole 74 und der oberen Stellplatte 75 erfolgt wie beim Ausführungsbeispiel von Figur 1, so dass einander entsprechende Bauteile auch mit denselben Bezugszeichen versehen sind.

Die in Figur 8 in einer Seitenansicht dargestellte Spanneinheit 71 enthält ein Gehäuse 76 mit einer auf dessen Oberseite befestigten plattenförmigen Werkstückauflage 77, einem an der Seite des Gehäuses 76 verschwenkbar angelenkten Spannarm 78 und einen an der Unterseite des Gehäuses 76 montierten Linearantrieb 79, durch den der strichpunktiert dargestellte Spannarm 3 zwischen einer in Figur 8 gezeigten Spannstellung zum Festspannen eines Werkstücks auf der Werkstückauflage 77 und einer Offenstellung zum Einlegen bzw. Entnehmen eines Werkstücks verschwenkt werden kann. In dem Gehäuse 76 ist ferner ein durch die Werkstückauflage 77 ragender Aufnahmestift 80 axial verschiebbar geführt und mit dem Linearantrieb 79 derart verbunden, dass beim Verschwenken des Spannarms 78 aus seiner Offenstellung in die Spannstellung gleichzeitig der Aufnahmestift 80 aus einer eingefahrenen Einlegestellung in eine ausgefahrene Haltestellung bewegt wird. Dadurch kann eine genaue Positionierung des Werkstücks erreicht werden. Der Spannarm 78 weist zur Aufnahme des Aufnahmestifts 80 an seiner Vorderseite einen entsprechenden Schlitz auf. Wird der Spannarm 78 durch den Linearantrieb 79 aus der Spannstellung in die Offenstellung zurück verschwenkt, wird auch gleichzeitig der Aufnahmestift 80 aus seiner ausgefahrenen Haltestellung wieder in seine eingefahrene Einlegestellung verschoben.

Der Linearantrieb 79 ist bei dem gezeigten Ausführungsbeispiel als Pneumatikzylinder mit einer durchgehenden beidseitigen Kolbenstange 81 ausgeführt. An der Unterseite des Linearantriebs 79 ist eine Platte 82 zur Halterung eines Handhebels 83 befestigt, durch den die Kolbenstange 81 manuell betätigt werden kann. Zum Verschwenken des Spannarms 78 ist dieser mit der Kolbenstange 81 über ein Gabelstück 84 und einen Gelenkhebel 85 gekoppelt.

Bei der Spanneinheit 71 kann die Kolbenstange 81 mit Hilfe des Handhebels 83 manuell nach oben verschoben werden, wobei der Spannarm 78 über das Gabelstück 84 und den Gelenkhebel 85 aus seiner Offenstellung in die Spannstellung verschwenkt wird. Gleichzeitig fährt auch der Aufnahmestift 80 aus und gelangt in die gemäß Figur 8 dargestellte Haltestellung. Dann kann der Pneumatikzylinder derart beaufschlagt werden, dass die Kolbenstange 81 nach oben gedrückt wird, wodurch die eigentliche Spannkraft erzeugt wird. Aus Sicherheitsgründen ist vorgesehen, dass der Pneumatikzylinder erst dann betätigt werden kann, wenn ein Sensor 86 die ordnungsgemäße Lage des Werkstücks auf der Auflage 2 signalisiert.

Zum Öffnen der Spannvorrichtung wird der Pneumatikzylinder entsprechend umgesteuert, so dass die Kolbenstange 81 nach unten fährt. Dadurch wird der Spannarm 78 wieder in seine Offenstellung verschwenkt und der Haltestift 80 fährt gleichzeitig ein. Das Werkstück liegt dann wieder frei und kann ohne Verspannung entnommen werden.

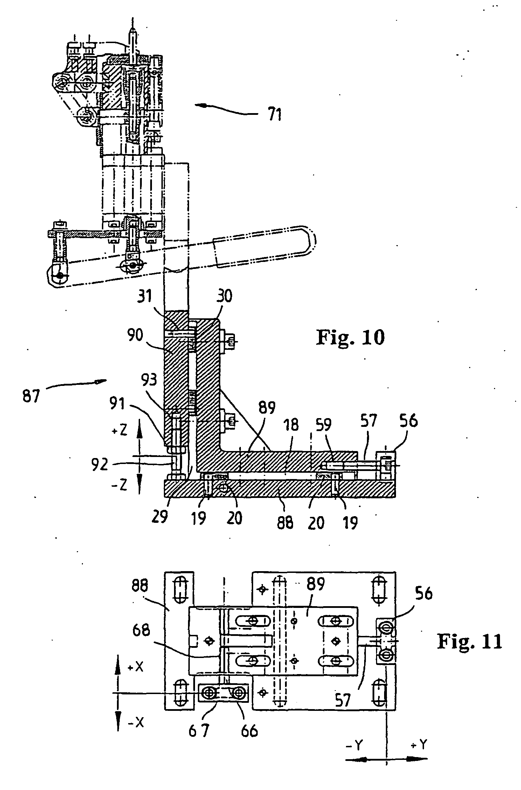

Bei dem in den Figuren 10 und 11 dargestellten zweiten Beispiel einer Spannvorrichtung, die nicht Gegenstand der Erfindung ist, entspricht die Spanneinheit 71 der Ausführungsform von Figur 8, so dass auf deren Beschreibung Bezug genommen wird. Die dortige Halterung 87 enthält ebenfalls eine auf einem Unterteil in einer ersten Achse (X-Achse) verstellbar angeordnete untere Stellplatte 88, eine auf der unteren Stellplatte 88 in der zweiten Achse (Y-Achse) verstellbare winkelförmige Konsole 89 und eine an der Konsole 89 in der dritten Achse (Z-Achse) verstellbar angeordnete obere Stellplatte 90. Auch hier sind die untere Stellplatte 88, die Konsole 89 und die obere Stellplatte 90 über Führungsnuten und zugehörige Nutensteine verschiebbar geführt. Einander entsprechende Bauteile sind daher auch mit denselben Bezugszeichen versehen. Die Verstellung der unteren Stellplatte 88 und der Konsole 89 erfolgt wie bei der Ausführung von Figur 5 über Stellschrauben 57 und 66, die in entsprechenden Stellklötzen 56 und 67 axial gesichert angeordnet sind und mit ihrem vorderen Gewindezapfen in zugehörige Gewindebohrungen 59 und 69 der unteren Stellplatte 88 bzw. der Konsole 89 eingreifen. Die Verstellung der oberen Stellplatte 90 erfolgt durch eine mit Hilfe einer Kontermutter 91 sicherbare Stellschraube 92, die mit ihrem Kopf auf der unteren Stellplatte 88 aufliegt und mit ihren Gewindezapfen in eine Gewindebohrung 93 an der Unterseite der oberen Stellplatte 90 eingreift.

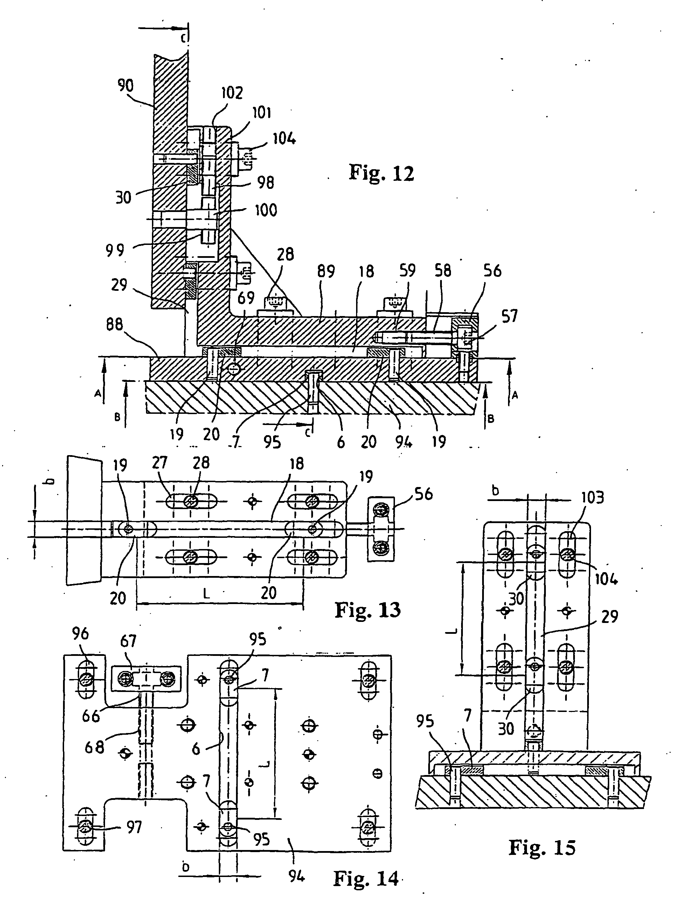

In den Figuren 12 bis 15 ist eine weitere Halterung für eine Spanneinheit gezeigt, die nicht Gegenstand der Erfindung ist, aber wichtig für das Verstehen der Erfindung ist. Diese weist mit Ausnahme der Stelleinrichtungen im Wesentlichen den Aufbau der Ausführungen von Figur 10 und 11 auf, so dass einander entsprechende Bauteile auch mit denselben Bezugszeichen versehen sind. Die gezeigte Halterung enthält ebenfalls eine auf einem feststehenden Unterteil 94 in einer ersten Achse (X-Achse) verstellbar angeordnete untere Stellplatte 88, eine auf der unteren Stellplatte 88 in der zweiten Achse (Y-Achse) verstellbare winkelförmige Konsole 89 und eine an der Konsole 89 in der dritten Achse (Z-Achse) verstellbar angeordnete obere Stellplatte 90. Auch hier sind die untere Stellplatte 88, die Konsole 89 und die obere Stellplatte 90 über Führungsnuten und zugehörige Nutensteine verschiebbar geführt.

Wie aus den Figuren 12 und 14 hervorgeht, enthält die untere Stellplatte 88 an ihrer Unterseite eine erste Führungsnut 6, in der zwei über Stifte 95 auf dem Unterteil 94 befestigte Nutensteine 7 geführt sind. Die Verstellung der unteren Stellplatte 88 erfolgt durch eine Stellschraube 66, die in einem auf dem Unterteil 94 befestigten Stellklotz 67 axial gesichert angeordnet ist und mit ihrem vorderen Gewindezapfen 68 in eine seitliche Gewindebohrung 69 der unteren Stellplatte 88 eingreift. An den Ecken der unteren Stellplatte 88 sind Langlöcher 96 für Halteschrauben 97 zur Fixierung der unteren Stellplatte 88 in einer gewünschten Stellung vorgesehen. An der Unterseite der Konsole 89 befindet sich eine in den Figuren 12 und 13 gezeigte zweite Führungsnut 18, in die zwei durch Stifte 19 an der unteren Stellplatte 88 befestigte Nutensteine 20 eingreifen. Die Verstellung der Konsole 89 erfolgt über eine Stellschraube 57, die in einem auf der unteren Stellplatte 88 befestigten Stellklotz 56 axial gesichert ist und mit ihrem vorderen Gewindezapfen 58 in eine Gewindebohrung 59 an der Seite der Konsole 89 eingreift. Auch hier kann die Konsole 89 über vier randseitige Langlöcher 27 und zugehörige Halteschrauben 28 in einer gewünschten Stellung fixiert werden.

In den Figuren 12 und 15 ist erkennbar, dass die obere Stellplatte 90 über eine in der Konsole 89 in Verstellrichtung der oberen Stellplatte 90 verlaufende dritte Führungsnut 29 und zwei an der oberen Stellplatte 90 befestigte Nutensteine 30 verschiebbar geführt ist. Im Unterschied zum Ausführungsbeispiel von Figur 10 erfolgt die Verstellung der oberen Stellplatte 90 über eine Gewindestange 98 mit Rechts- und Linksgewinde, wobei das Linksgewinde 99 in einen an der oberen Stellplatte 90 seitlich befestigten Stellklotz 100 und das Rechtsgewinde 101 in eine Gewindebohrung 102 der Konsole 89 eingreift. Die obere Stellplatte 90 kann auch hier über vier in Figur 15 gezeigte Langlöcher 103 und zughörige Halteschrauben 104 in einer gewünschten Stellung fixiert werden.

Die in den Figuren 12 bis 15 gezeigte Breite b der Führungsnuten 6, 18 bzw. 29 und der Abstand L der zugehörigen Nutensteine 7, 20 bzw. 30 sind so aufeinander abgestimmt, dass das Führungsverhältnis L/b, d.h. das Verhältnis des Abstands der Nutensteine L zur Breite der Führungsnut b, mindestens 7 (gemäß der Erfindung), vorzugsweise zwischen 7 und 10 beträgt. Dadurch wird eine genaue und dennoch klemmungsfreie Einstellung ermöglicht.

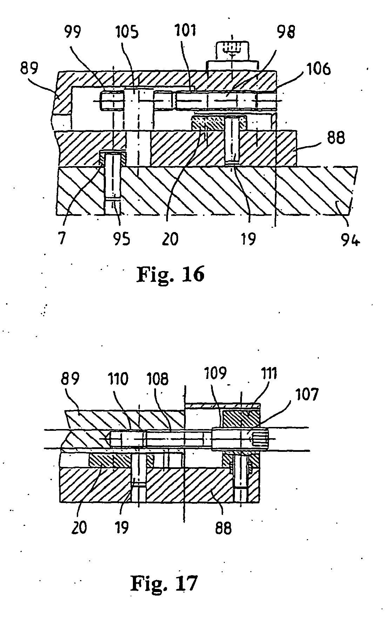

In Figur 16 ist eine alternative Stelleinrichtung für die Konsole 89 durch eine Gewindestange 98 mit Linksgewinde 99 und Rechtgewinde 101 gezeigt (gemäß der Erfindung). Das Linksgewinde 99 steht in Eingriff mit einem an der unteren Stellplatte 88 befestigten Stellklotz 105 und das Rechtsgewinde 101 greift in eine seitliche Gewindebohrung 106 an der Konsole 89 ein.

Eine weitere Verstellmöglichkeit geht aus Figur 17 hervor die nicht Gegenstand der Erfindung, aber wichtig für das Verstehen der Erfindung ist. Hier erfolgt die Verstellung über eine als Differentialgewindeschraube ausgebildete Stellschraube 107, die ein vorderes Gewinde 108 mit geringerem Durchmesser und geringerer Steigung (z.B. M8×1,25) und ein hinteres Gewinde 109 mit größerem Durchmesser und größerer Steigung (z.B. M10×1,5) enthält. Die Differentialgewindeschraube 107 greift mit ihrem vorderen Gewinde 108 in eine Gewindebohrung 110 an der Seite der Konsole 89 und mit ihrem hinteren Gewinde 109 in einen auf der unteren Stellplatte 99 befestigten Gewindeklotz 111 ein. Dadurch kann eine besonders gute Feineinstellung erreicht werden.

Die Erfindung ist nicht auf die in den Figuren gezeigten und vorstehend beschriebenen Ausführungsbeispiele (gemäß der Erfindung) beschränkt (siehe die Ansprüche). So können z.B. die Verstellelemente oder Spanneinheiten auch beliebig kombiniert werden. Das unter Bezugnahme auf die Ausführung der Figuren 12 bis 15 beschriebene Führungsverhältnis kann auch bei den anderen Ausführungsbeispielen verwirklicht sein.

## Patentansprüche

1. Halterung für eine Spanneinheit (1; 71), insbesondere für die Schweißbearbeitung, mit einer über mindestens eine erste Stelleinrichtung (66, 67) in einer ersten Achse (X-Achse) verstellbaren unteren Stellplatte (3; 53; 73; 88), einer auf der unteren Stellplatte (3; 53; 73; 88) über mindestens eine zweite Stelleinrichtung () in einer zur ersten Achse senkrechten zweiten Achse (Y-Achse) verstellbaren Konsole (4; 54; 74; 89) und einer an der Konsole (2; 52; 72; 89) über mindestens eine dritte Stelleinrichtung (62, 63) in einer zur ersten und zweiten Achse senkrechten dritten Achse (Z-Achse) verstellbaren oberen Stellplatte (5; 55; 75; 90) zur Befestigung der Spanneinheit (1; 71), **dadurch gekennzeichnet, dass** die untere Stellplatte (3; 53; 73; 88), die Konsole (4; 54; 74; 89) und die obere Stellplatte (5; 55; 75; 90) über jeweils eine Führungsnut (6, 18, 29) und jeweils zwei beabstandete Nutensteine (7, 20, 30) verschiebbar geführt sind, wobei das Verhältnis des Abstands der Nutensteine (7, 20, 30) zur Breite der Führungsnut (6, 18, 29) mindestens 7 beträgt und dass die Stelleinrichtungen (56, 57; 62, 63; 66, 67) als Schraubverstellungen mit einem Stellklotz (111) und einer zugehörigen Stellschraube (107) ausgeführt sind, wobei die Stellschraube (107) als Differentialgewindeschraube ausgebildet ist, die ein vorderes Gewinde (108) mit geringerem Durchmesser und geringerer Steigung sowie ein hinteres Gewinde (109) mit größerem Durchmesser und größerer Steigung enthält.

2. Halterung für eine Spanneinheit nach Anspruch 1, **dadurch gekennzeichnet, dass** die Konsole (4; 54) eine untere Standplatte (16) und einen vertikal nach oben ragenden Haltesteg (17) enthält.

3. Halterung für eine Spanneinheit nach Anspruch 2, **dadurch gekennzeichnet, dass** die Konsole (74; 89) winkelförmig ist.

4. Spannvorrichtung mit einer Halterung und einer an dieser befestigten Spanneinheit (1; 71), **dadurch gekennzeichnet, dass** die Halterung nach einem der Ansprüche 1 bis 3 ausgebildet ist.

## Claims

1. Positioning means for a clamping unit (1; 71), in particular for welding work, comprising a lower adjustment plate (3; 53; 73; 88) which can be moved in a first axis (X-axis) via at least a first adjustment means (66, 67), a console (4; 54; 74; 89) which can be moved on the lower adjustment plate (3; 53; 73; 88) in a second axis (Y-axis) perpendicular to the first axis via at least a second adjustment means (), and an upper adjustment plate (5; 55; 75; 90), which can be moved on the console (2; 52; 72; 89) in a third axis (Z-axis) perpendicular to the first and second axes via at least a third adjustment means (62, 63), for fastening the clamping unit (1; 71), **characterised in that** the lower adjustment plate (3; 53; 73; 88), the console (4; 54; 74; 89) and the upper adjustment plate (5; 55; 75; 90) are each displaceably guided via a respective guide groove (6, 18, 29) and two respective spaced slide blocks (7, 20, 30), the ratio of the distance between the slide blocks (7, 20, 30) to the width of the guide groove (6, 18, 29) being at least 7, and **in that** the adjustment means (56, 57; 62, 63; 66, 67) are constructed as screw adjustments comprising an adjustment block (111) and an associated adjustment screw (107), the adjustment screw (107) being formed as a differential thread screw which comprises a front thread (108) of smaller diameter and lesser pitch and a rear thread (109) of greater diameter and greater pitch.

2. Positioning means for a clamping unit according to claim 1, **characterised in that** the console (4; 54) comprises a lower base plate (16) and a retaining web (17) which projects vertically upwards.

3. Positioning means for a clamping unit according to claim 2, **characterised in that** the console (74; 89) is angular.

4. Clamping device comprising a positioning means and a clamping unit (1; 71) fastened thereto, **characterised in that** the positioning means is formed according to any one of claims 1 to 3.

## Revendications

1. Dispositif de fixation pour une unité de serrage (1 ; 71), en particulier pour la soudure, comportant une plaque de positionnement inférieure (3 ; 53 ; 73 ; 88) pouvant être déplacée dans un premier axe (axe X) par l'intermédiaire au moins d'un premier système de positionnement (66, 67), une console (4 ; 54 ; 74 ; 89) pouvant être déplacée dans un deuxième axe (axe Y) perpendiculaire par rapport au premier axe sur la plaque de positionnement inférieure (3 ; 53 ; 73 ; 88) par l'intermédiaire au moins d'un deuxième système de positionnement (56, 57) ainsi qu'une plaque de positionnement supérieure (5 ; 55 ; 75 ; 90) pouvant être déplacée dans un troisième axe (axe Z) perpendiculaire par rapport au premier axe et au deuxième axe au niveau de la console (2 ; 52 ; 72 ; 89) par l'intermédiaire au moins d'un troisième système de positionnement (62, 63) et destinée à fixer l'unité de serrage (1 ; 71), **caractérisé en ce que** la plaque de positionnement inférieure (3 ; 53 ; 73 ; 88), la console (4 ; 54 ; 74 ; 89) et la plaque de positionnement supérieure (5 ; 55 ; 75 ; 90) sont guidées de manière à pouvoir être coulissées sur respectivement une rainure de guidage (6, 18, 29) et respectivement sur deux écrous pour rainures (7, 20, 30) espacés, sachant que le rapport de la distance des écrous pour rainures (7, 20, 30) par rapport à la largeur de la rainure de guidage (6, 18, 29) est d'au moins 7, et **en ce que** les systèmes de positionnement (56, 57 : 62, 63 ; 66, 67) sont réalisés comme des systèmes d'ajustage par vis avec un bloc de réglage (111) et une vis de réglage (107) associée, sachant que la vis de réglage (107) est configurée comme une vis filetée différentielle, qui comporte un filetage avant (108) avec un diamètre plus petit et un pas plus petit ainsi qu'un filetage arrière (109) avec un diamètre plus grand et un pas plus grand.

2. Dispositif de fixation pour une unité de serrage selon la revendication 1, **caractérisé en ce que** la console (4 ; 54) comporte une plaque verticale (16) inférieure et une traverse de retenue (17) faisant saillie verticalement vers le haut.

3. Dispositif de fixation pour une unité de serrage selon la revendication 2, **caractérisé en ce que** la console (74 ; 89) est angulaire.

4. Dispositif de serrage comportant un dispositif de fixation et une unité de serrage (1 ; 71) fixée as dispositif de fixation, **caractérisé en ce que** le dispositif de fixation est configuré selon l'une quelconque des revendications 1 à 3.
